# EUROPÄISCHE PATENTSCHRIFT

(11) **EP 3 675 206 B1**
(45) Veröffentlichungstag und Bekanntmachung des Hinweises auf die Patenterteilung: **20.07.2022**
(21) Anmeldenummer: 19208750.0
(22) Anmeldetag: 13.11.2019
(51) Int. Cl.: H01M 50/186, H01M 50/193, C09K 3/10

(54) **VERSCHLUSSSTOPFEN EINER BATTERIE**
BATTERY PLUG
BOUCHON DE FERMETURE D'UNE BATTERIE

(30) Priorität: 27.12.2018 DE 102018010001
(43) Veröffentlichungstag der Anmeldung: 01.07.2020
(73) Patentinhaber: Frötek- Vermögensverwaltung GmbH, 37520 Osterode am Harz (DE)
(72) Erfinder: Koch, Thomas, 37154 Northeim (DE)
(74) Vertreter: Cohausz Hannig Borkowski Wißgott

(56) Entgegenhaltungen:
- EP-A2- 0 244 738
- DE-A1- 10 055 373
- DE-U1- 9 101 356
- US-A- 4 176 097

## Beschreibung

Die Erfindung betrifft einen Verschlussstopfen einer Batterie mit einem Außengewinde zum Einbau insbesondere zum Einschrauben in die Öffnung des Batteriedeckels, wobei der Verschlussstopfen außenseitig mindestens eine gasdichte Dichtung aufweist.

Aufladbare Batterien insbesondere von Kraftfahrzeugen oder Gabelstaplern sind aus Batteriezellen zusammengesetzt, deren Verschlussdeckel eine Öffnung aufweist, der durch einen einschraubbaren Verschlussstopfen geschlossen wird. Hierbei weist der Verschlussstopfen außenseitig eine Dichtung aus einem elastischen Material auf, das nach dem Einbau des Verschlussstopfens unter Vorspannung steht. Es hat sich gezeigt, dass insbesondere bei hohen Temperaturen nach einiger Zeit die Vorspannung der Dichtung so weit abfällt, dass der Verschluss undicht wird.

Aufgabe der Erfindung ist es, einen Verschlussstopfen der eingangs genannten Art so zu verbessern, dass nach dem Einbau des Verschlussstopfens eine hohe Dichtheit über lange Zeit gewährleistet ist.

Diese Aufgabe wird erfindungsgemäß dadurch gelöst, dass die Dichtung eine Mischung aus Polypropylen oder Polyethylen und Polyisobutylen aufweist.

Diese Materialmischung zeigt die vorteilhafte Eigenschaft, dass auch nach Jahren die Vorspannung der Dichtung eines eingebauten Verschlussstopfens erhalten bleibt und damit die Dichtheit über lange Zeit gegeben ist. Vorzugsweise wird vorgeschlagen, dass die Mischung einen Teil Polypropylen oder Polyethylen und 5 bis 20 insbesondere 10 Teile Polyisobutylen aufweist.

Hierbei ist die Dichtung von mindestens einem O-Ring und/oder einer außen an den Verschlussstopfen angespritzten Schicht gebildet.

Die Dichtung kann neben der Mischung aus Polypropylen oder Polyethylen und Polyisobutylen noch Zuschlagstoffe aufweisen. Die Zuschlagsstoffe können Kaolin, Ruß und/oder ein Erdöldestillat insbesondere mit Wasserstoff behandelt sein.

Ausführungsbeispiele der Erfindung werden im Folgenden näher beschrieben.

Der Verschlussstopfen einer aufladbaren Batterie insbesondere eines Kfz. oder eines Gabelstaplers wird mit seinem Außengewinde in die ein Innengewinde aufweisende Öffnung des Deckels der Batteriezelle eingeschraubt. Statt einer Schraubverbindung kann auch eine andere Verbindungsart wie Stecken oder Schweißen verwendet werden. Hierbei weist der Verschlussstopfen außenseitig mindestens eine gasdichte Dichtung auf in Form mindestens eines Dichtungsringes (O-Ring) aus Kunststoff und/oder einer außen an den Verschluss angespritzten Kunststoffschicht.

Der Kunststoff der Dichtung weist eine Mischung aus Polypropylen oder Polyethylen und Polyisobutylen auf, vorzugsweise in einem Mischungsverhältnis von einem Teil Polypropylen oder Polyethylen und 5 bis 20 insbesondere 10 Teile Polyisobutylen.

Der Kunststoff der Dichtung kann noch Zuschlagsstoffe aufweisen, wie Kaolin, Ruß und/oder ein Erdöldestillat insbesondere mit Wasserstoff behandelt.

## Patentansprüche

1. Verschlussstopfen einer Batterie mit einem Außengewinde zum Einbau insbesondere zum Einschrauben in die Öffnung des Batteriedeckels, wobei der Verschlussstopfen außenseitig mindestens eine gasdichte Dichtung aufweist, **dadurch gekennzeichnet, dass** die Dichtung eine Mischung aus Polypropylen oder Polyethylen und Polyisobutylen aufweist.

2. Verschlussstopfen nach Anspruch 1, **dadurch gekennzeichnet, dass** die Mischung einen Teil Polypropylen oder Polyethylen und 5 bis 20 insbesondere 10 Teile Polyisobutylen aufweist.

3. Verschlussstopfen nach Anspruch 1 oder 2, **dadurch gekennzeichnet, dass** die Dichtung von mindestens einem O-Ring und/oder einer außen an den Verschlussstopfen angespritzten Schicht gebildet ist.

4. Verschlussstopfen nach einem der vorherigen Ansprüche, **dadurch gekennzeichnet, dass** die Dichtung neben der Mischung aus Polypropylen oder Polyethylen und Polyisobutylen noch Zuschlagstoffe aufweist.

5. Verschlussstopfen nach Anspruch 4, **dadurch gekennzeichnet, dass** die Zuschlagsstoffe Kaolin, Ruß und/oder ein Erdöldestillat insbesondere mit Wasserstoff behandelt sind.

## Claims

1. Battery sealing plug with an external thread for installation, notably to screw into the opening in the battery cover, in which the sealing plug has at least one gas-tight seal on the outside, **characterised by** the seal being made of a blend of polypropylene or polyethylene and polyisobutene.

2. Sealing plug according to claim 1, **characterised by** the blend consisting of one part polypropylene or polyethylene and 5 to 20 parts, notably 10 parts polyisobutene.

3. Sealing plug according to claim 1 or 2, **characterised by** the seal being formed by at least one O-ring and/or a layer co-extruded on the outside of the sealing plug.

4. Sealing plug according to one of the preceding claims, **characterised by** the seal, aside from the blend of polypropylene or polyethylene and polyisobutene, also containing additives.

5. Sealing plug according to claim 4, **characterised by** the additives kaolin, soot and/or a petroleum distillate being treated with hydrogen in particular.

## Revendications

1. Bouchon de fermeture d'une batterie doté d'un filetage extérieur pour le montage, en particulier pour le vissage dans l'ouverture du couvercle de la batterie, sachant que le bouchon de fermeture présente du côté extérieur au moins un joint d'étanchéité aux gaz, **caractérisé en ce que** le joint d'étanchéité présente un mélange de polypropylène ou de polyéthylène et de polyisobutylène.

2. Bouchon de fermeture selon la revendication 1, **caractérisé en ce que** le mélange comprend une partie de polypropylène ou de polyéthylène et 5 à 20, en particulier 10 parties de polyisobutylène.

3. Bouchon de fermeture selon la revendication 1 ou 2, **caractérisé en ce que** le joint d'étanchéité est formé par au moins un joint torique et/ou une couche injectée à l'extérieur sur le bouchon de fermeture.

4. Bouchon de fermeture selon l'une des revendications précédentes, **caractérisé en ce que** le joint contient, outre le mélange de polypropylène ou de polyéthylène et de polyisobutylène, des additifs.

5. Bouchon de fermeture selon la revendication 4, **caractérisé en ce que** les additifs kaolin, noir de carbone et/ou un distillat de pétrole sont traités, notamment avec de l'hydrogène.
